(19) Europäisches Patentamt
European Patent Office
Office européen des brevets

(11) **EP 2 610 073 B1**

(12) **EUROPEAN PATENT SPECIFICATION**

(45) Date of publication and mention
of the grant of the patent:
**25.05.2016 Bulletin 2016/21**

(51) Int Cl.:
***B60C 7/10*** *(2006.01)*

(21) Application number: **12197314.3**

(22) Date of filing: **14.12.2012**

(54) **Non-pneumatic tire**

Luftloser Reifen

Bandage non pneumatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.12.2011 KR 20110146274**

(43) Date of publication of application:
**03.07.2013 Bulletin 2013/27**

(73) Proprietor: **Hankook Tire Co., Ltd.**
**Seoul 135-723 (KR)**

(72) Inventor: **Bae, Jong Hak**
**Sejong-si**
**339-014 (KR)**

(74) Representative: **Intès, Didier Gérard André et al**
**Cabinet Beau de Loménie**
**158, rue de l'Université**
**75340 Paris Cedex 07 (FR)**

(56) References cited:
**WO-A1-89/05736     US-A- 1 278 416**

**Description**

BACKGROUND OF THE INVENTION

1. Field of the Invention

The present invention relates to a vehicle tire, and more particularly, to a non-pneumatic tire that is not filled with compressed air.

2. Description of the Related Art

When a non-pneumatic tire supports a load, a spoke positioned at a top portion thereof is subjected to a tensile force and a spoke positioned in a bottom portion is subjected to a compressive force.

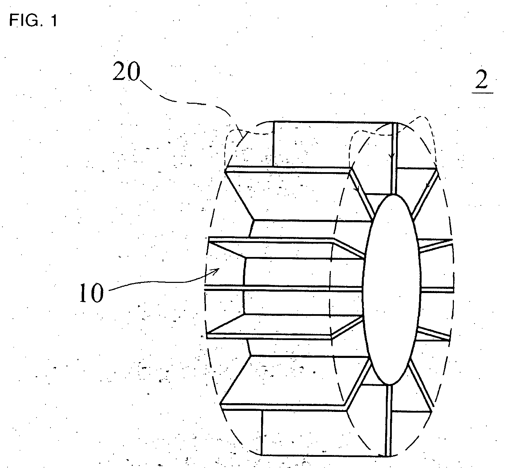

Fig. 1 schematically shows a conventional non-pneumatic tire 2. In Fig. 1, although a spoke 10 placed at a top portion of the tire is subjected to tensile force, a similar problem occurs at a bottom portion thereof which is in contact with a road surface.

Specifically, a force having the same magnitude but directed in an opposite direction to the force applied to the spoke is applied to an outer cylindrical band 20 that is in contact with the spoke 10, causing deformation of the band as shown in the figure.

Such deformation significantly deteriorates uniformity and RRO (Radial Run Out) of the tire while significantly affecting ride comfort of a vehicle.

In addition, since the spoke 10 of the non-pneumatic tire 2 comes into contact with a road surface in a straight line and thus is subjected to impact from the road surface, significant noise and vibration can be discontinuously generated.

Thus, it can be a very important task to develop a non-pneumatic tire having spokes configured to improve performance and ride comfort through reduction of such deformation while reducing noise and vibration upon vehicle driving.

WO 89/05736 A1 and US 1,278,416 A show non-pneumatic tires according to the preamble of claim 1.

SUMMARY OF THE INVENTION

The present invention is conceived to solve such problems in the related art, and an aspect of the present invention is to provide a non-pneumatic tire having a spoke unit, which is configured to improve performance and ride comfort through reduction of deformation of the non-pneumatic tire while reducing noise and vibration upon vehicle driving.

The present invention is defined in the claims.

The plural spoke blades may be arranged such that a supporting section of the tire succeeds from one of the spoke blades to the following spoke blade when supported by the road surface during vehicle driving.

An outward lateral force (Xo) and an inward lateral force (Xi) generated by the plurality of spoke blades having the two or more inclination patterns may be calculated by the following formulae:

$$Xo = \sum_{o=1}^{k1} (Wo/\cos\theta o) \times No$$

and

$$Xi = \sum_{i=1}^{k2} (Wi/\cos\theta i) \times Ni,$$

and
a CON value representing a vehicle lurch property is obtained by the following formula:

$$CON = (Xo\text{-}Xi)/(k1+k2),$$

wherein Wo and Wi are widths of the spoke blades in a widthwise direction of the tire, $\theta o$ and $\theta i$ are angles of the spoke blades with respect to the axial direction of the axle, No and Ni are the numbers of spoke blades, and k1 and k2 are the numbers of the inclination patterns.

BRIEF DESCRIPTION OF THE DRAWINGS

Fig. 1 is a perspective view of a conventional non-pneumatic tire;
Figs. 2(a) and (b) are a perspective view and a front view of a non-pneumatic tire according to one exemplary reference embodiment not according to the present invention, respectively; and
Figs. 3(a) and (b) are a perspective view and a front view of a non-pneumatic tire according to an exemplary embodiment of the present invention, respectively.

DESCRIPTION OF THE EMBODIMENTS

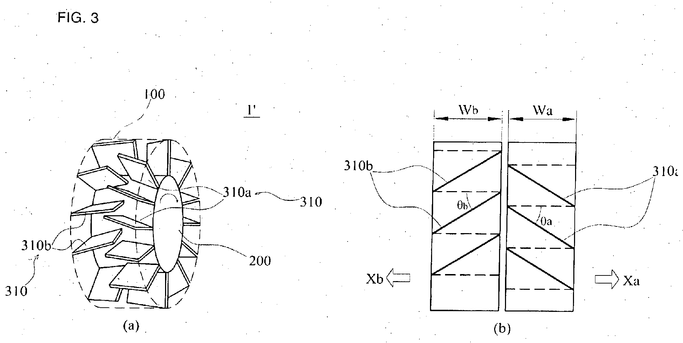

An exemplary embodiment of the present invention is shown in Fig. 3 and will be described in detail with reference to the accompanying drawings.

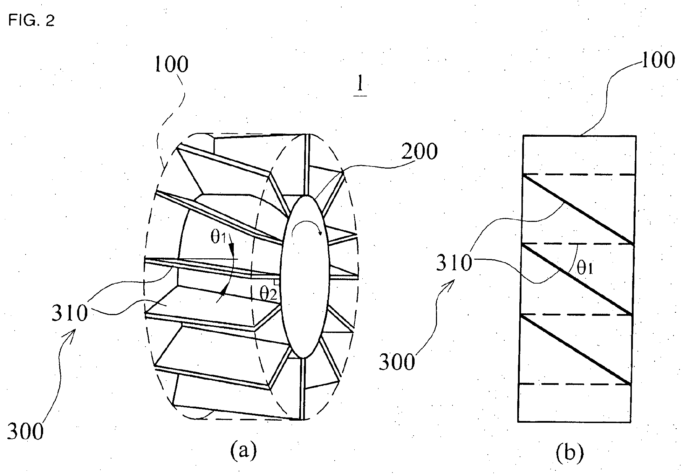

Figs. 2 and 3 schematically show non-pneumatic tires 1 and 1'.

The non-pneumatic tire 1 according to one exemplary embodiment may generally include an outer cylindrical section 100 having a tire tread, an inner cylindrical section 200 connected to an axle of a vehicle, and a noise and vibration prevention spoke unit 300 provided to connect the outer cylindrical section and the inner cylindrical section to each other.

The noise and vibration prevention spoke unit 300 is configured to be continuously supported by a road surface through the outer cylindrical section 100 during vehicle driving, thereby reducing noise and vibration.

That is, as described in "Description of the Related Art," in a non-pneumatic tire in the related art, the spoke is discontinuously supported by a road surface during vehicle driving, thereby generating significant noise and vibration.

Hence, according to the present invention, the noise and vibration prevention spoke unit 300 is configured to be continuously supported by a road surface during vehicle driving, thereby significantly reducing noise and vibration.

In Figs. 2 and 3, such a noise and vibration prevention spoke unit 300 includes a plurality of spoke blades 310, each of which connects the outer cylindrical section 100 to the inner cylindrical section 200 and is inclined with respect to an axial direction of the axle.

Specifically, in the embodiment of Fig. 2, each of the spoke blades 310 may be connected at one side thereof to an inner circumferential surface of the outer cylindrical section 100 and at the other side thereof to an outer circumferential surface of the inner cylindrical section 200. Thus, the one side is a radially outer side, and the other side is a radially inner side.

In this case, the spoke blade 310 may be configured so that an angle $\theta_1$ between one imaginary line along the one side or the other side thereof and another imaginary line parallel to the axle (or a widthwise direction of a tire) is within a predetermined range, e.g., from 10 to 80 degrees.

In addition to the one and other sides, the spoke blade 310 has a laterally outer side and a laterally inner side. A direction from the laterally outer side to the laterally inner side may be configured to be inclined with respect to the axial direction. That is, the spoke blade 310 may be formed to have one surface inclined with respect to the axial direction.

Thus, if the plurality of spoke blades 310 is inclined or slanted, the respective spoke blades may be continuously supported by a road surface along the slanted direction at one side while the tire rotates during vehicle driving.

In detail, assuming that the vehicle drives from a front side to a rear side on the figure, the non-pneumatic tire 1 rotates clockwise.

In this case, since the respective spoke blades 310 are inclined right downward, a left portion of the spoke blade will be initially supported by a road surface, the middle of the spoke blade will then be continuously supported in a slanted direction by the road surface, and a right portion of the spoke blade will be finally supported by the road surface, during vehicle driving.

Accordingly, since impact is not discontinuously applied to the tire while the respective spoke blades 310 are continuously supported, noise and vibration is reduced and thus ride comfort can be improved.

In addition, the spoke blades 310 are arranged to be slanted, the slanted spoke blades cause a lateral force, which may be used to solve a leaning phenomenon on a road. In addition, a desirable lateral force may be obtained by adjusting a width and angle of the spoke blade and the number of spoke blades.

The plurality of spoke blades may be disposed in a zigzag arrangement.

As shown in Fig. 2(a), the plurality of spoke blades 310 may be vertically connected to the inner circumferential surface of the outer cylindrical section 100 and the outer circumferential surface of the inner cylindrical section 200.

That is, when the non-pneumatic tire 1 is supported by a road surface, the noise and vibration prevention spoke unit 300 needs to withstand supporting force by transmitting and dispersing such supporting force.

Thus, when the non-pneumatic tire 1 is supported by a road surface, the noise and vibration prevention spoke unit 300 is vertical to the road surface. In detail, an angle $\theta_2$ of the spoke blade with respect to a contact plane at points where the spoke blades 310 are connected to the inner cylindrical section 200 is a right angle.

Also, as shown in Fig. 2, the plurality of spoke blades 310 may be arranged such that a supporting section of the tire succeeds from one of the spoke blades to the following spoke blade when supported by a road surface during vehicle driving.

As described above, the spoke unit is continuously supported by a road surface during vehicle driving. To this end, the plurality of spoke blades 310 may be configured to be successively supported from one spoke blade to the following spoke blade by the road surface while each of the spoke blades is continuously supported thereby.

In detail, when the non-pneumatic tire 1 rotates clockwise as described above, the plurality of spoke blades 310 is supported by a road surface in such a way that the left portion of one of the spoke blades continues to a right portion thereof and then the right portion of the spoke blade continues to the left portion of the following spoke blade.

That is, a right portion of a leading spoke blade may be collinear with a left portion of the following spoke blade in a width direction.

In other words, when the non-pneumatic tire 1 is seen in front view, the spoke blades may be arranged such that a gap is not formed between the height of the right portion of the leading spoke blade and the height of the left portion of the following spoke blade in a vertical direction.

To this end, by forming a region in which the right portion of the leading spoke blade and the left portion of the following spoke blade overlap each other, the spoke blades may be arranged so that the right portion of the leading spoke blade and the left portion of the following spoke blade are supported by a road surface at the same time.

Preferably, in consideration of economic feasibility such as material cost and constant support of the spoke unit, as shown in Fig. 2(b), the spoke blades may be arranged such that the lowest point of the right portion of the leading spoke blade is collinear with the highest point of the left portion of the following spoke blade in the width direction.

Accordingly, the moment the leading spoke blade is separated from the road surface, the following spoke blade is immediately brought into contact with the road surface, thereby hallowing the spoke blades to be successively supported by the road surface.

According to the present invention, the plurality of spoke blades 310 have two or more inclination patterns in the axial direction of the axle. That is, the two or more inclination patterns are arranged in the widthwise direction.

Referring now to Fig. 3, in the non-pneumatic tire 1' according to another exemplary embodiment, the spoke blades 310 has two inclination patterns in the axial direction of the axle, wherein they are inclined in opposite directions.

Specifically, the spoke blades 310 have two inclination patterns and are inclined towards left and right sides of the tire in the opposite directions.

In this case, assuming that the vehicle drives from the front side to the rear side on the drawing and the non-pneumatic tire 1' rotates clockwise, right spoke blades 310a are inclined right downward to generate a right lateral force Xa, and left spoke blades 310b are inclined left downward to generate a left lateral force Xb.

In this case, the number, angle and width of the respective right and left spoke blades 310a and 310b are properly selected, thereby making it possible for a designer to control a lateral force according to an angle of belt of an existing pneumatic tire and a lateral force caused from deviation encountered during manufacture.

Also, it is possible to manufacture domestic tires and tires for export through such a simple design change and to control vehicle lurch properties through such design.

Such effects will be described in detail below using the following formulae, wherein reference is made to Fig. 3(b) schematically showing the right and left spoke blades 310a and 310b separated from each other.

$$Xa = (Wa/\cos\theta a) \times Na \qquad (1)$$

$$Xb = (Wb/\cos\theta b) \times Nb \qquad (2)$$

$$CON = (Xa - Xb)/2 \qquad (3)$$

Here, Xa and Xb are respectively relative magnitudes of outward and inward lateral forces caused by the spoke blades 310a and 310b having right and left inclination patterns, Wa and Wb are widths of the respective spoke blades in a tire widthwise direction, θa and θb are angles of the respective spoke blades with respect to the tire widthwise direction, Na and Nb are the numbers of the respective spoke blades, and CON (conicity) represents a vehicle lurch property in the art.

Specifically, Formula 1 represents the relative magnitude of the lateral force Xa caused by the spoke blades 310a having the right inclination pattern, which may be determined by the width Wa, the angle θa and the number Na of the right spoke blades.

In the same manner, Formula 2 represents the relative magnitude of the lateral force Xb caused by the spoke blades 310b having the left inclination pattern, which may be determined by the width Wb, the angle θb and the number Nb of the left spoke blades.

In addition, Formula 3 represents the CON value, which may be determined by averaging a difference between the lateral forces Xa and Xb obtained from Formulae 1 and 2.

That is, the designer may properly adjust at least one of the widths Wa and Wb, the angles θa and θb, and the numbers Na and Nb of the respective spoke blades 310a and 310b having the right and left inclination patterns, thereby obtaining the desired lateral forces Xa and Xb from the respective spoke blades.

Further, the designer may adjust these values to easily design a non-pneumatic tire having a desired CON value, i.e., a desired lurch property.

Using the above formulae, an outward lateral force Xo, an inward lateral force Xi, and accordingly a leaning phenomenon property (CON value) generated by the plurality of spoke blades having two or more inclination patterns are represented by the following general formula.

First, the outward lateral force Xo of a vehicle generated by a plurality of spoke blades having at least one inclination pattern wherein the spoke blades are inclined approximately in one direction may be calculated by the following formula:

$$Xo = \sum_{o=1}^{k1} (Wo/\cos\theta o) \times No \qquad (4)$$

In addition, the inward lateral force Xi of the vehicle generated by a plurality of spoke blades having at least one inclination pattern wherein the spoke blades are inclined approximately in an opposite direction may be calculated by the following formula:

$$Xi = \sum_{i=1}^{k2} (Wi/\cos\theta i) \times Ni \qquad (5)$$

These represent relative magnitudes of the respective lateral forces.

Next, the CON value representing the vehicle lurch property is obtained from the following formula:

$$CON = (Xo - Xi)/(k1 + k2) \qquad (6)$$

wherein Wo and Wi are widths of the spoke blades in the widthwise direction of the tire, θo and θi are angles of the spoke blades with respect to the axial direction of the axle, No and Ni are the numbers of spoke blades, and k1 and k2 are the numbers (or kinds) of the inclination patterns.

Specifically, each of the lateral forces Xo and Xi is proportional to the width and the number of spoke blades. Each lateral force is also proportional to the cosine of the angle of the spoke blade. That is, each of the lateral forces Xo and Xi is increased as the angle of the spoke blade is increased.

In addition, as described above, the magnitudes of the respective lateral forces Xo and Xi may be determined by adjusting the respective values and using Formulae 4 and 5. Then, a desired CON value can be obtained using Formula 6 from the respective lateral forces Xo and Xi thus obtained.

In addition, a PRAT (Plysteer Residual Aligning Torque) value of a tire may also be adjusted using the same method.

In the meantime, details of the non-pneumatic tire 1' according to this embodiment except for this feature are identical to those of the non-pneumatic tire 1.

Spoke blades arranged at an angle, so that the spoke unit is continuously supported by a road surface during vehicle driving, are enabling reduction of noise and vibration while improving ride comfort.

In addition, the non-pneumatic tire according to the present invention allows a designer to set lateral forces, as needed, as opposed to a conventional non-pneumatic tire, thereby enabling control of a leaning phenomenon caused by road structure.

Furthermore, the non-pneumatic tire according to the present invention allows a designer to easily set a lateral force according to an angle and direction of belt of an existing pneumatic tire through adjustment of an angle and length of the spoke blades.

The present invention is defined in the claims.

## Claims

**1.** A non-pneumatic tire (1,1') comprising:

an outer cylindrical section (100) having a tire tread;
an inner cylindrical section (200) connected to an axle of a vehicle; and
a noise and vibration prevention spoke unit (300) connecting the outer cylindrical section (100) to the inner cylindrical section (200),
wherein the noise and vibration prevention spoke unit (300) comprises a plurality of spoke blades (310) connecting the outer cylindrical section (100) to the inner cylindrical section (200), each of the spoke blades (310) being inclined with respect to an axial direction of the axle,
wherein each of the spoke blades (310) is vertically connected to an inner circumferential surface of the outer cylindrical section (100) and an outer circumferential surface of the inner cylindrical section (200),

**characterized in that** the plural spoke blades (310) are arranged to have two or more inclination patterns in the axial direction of the axle while being inclined in opposite directions to each other, the noise and vibration prevention spoke unit (300) being continuously supported by a road surface during vehicle driving, thereby reducing noise and vibration.

## Patentansprüche

**1.** Luftloser Reifen (1, 1'), umfassend:

einen äußeren zylinderförmigen Abschnitt (100), der eine Reifenlauffläche aufweist,
einen inneren zylinderförmigen Abschnitt (200), der mit einer Achse eines Fahrzeugs verbunden ist, und
eine lärm- und vibrationsvermeidende Speicheneinheit (300), die den äußeren zylinderförmigen Abschnitt (100) mit dem inneren zylinderförmigen Abschnitt (200) verbindet,
wobei die lärm- und vibrationsvermeidende Speicheneinheit (300) mehrere Speichenblätter (310) umfasst, die den äußeren zylinderförmigen Abschnitt (100) mit dem inneren zylinderförmigen Abschnitt (200) verbinden, wobei jedes der Speichenblätter (310) in Bezug auf eine axiale Richtung der Achse geneigt ist,
wobei jedes der Speichenblätter (310) vertikal mit einer inneren Umfangsoberfläche des äußeren zylinderförmigen Abschnitts (100) und einer äußeren Umfangsoberfläche des inneren zylinderförmigen Abschnitts (200) verbunden ist,

**dadurch gekennzeichnet, dass** die inneren Speichenblätter (310) so angeordnet sind, dass sie in der axialen Richtung der Achse ein oder mehrere Neigungsmuster aufweisen, während sie zueinander in entgegengesetzte Richtungen geneigt sind, wobei die lärm- und vibrationsvermeidende Speicheneinheit (300) während der Fahrt des Fahrzeugs durchgängig auf einer Straßenoberfläche aufliegt, wodurch Lärm und Vibrationen vermindert werden.

## Revendications

**1.** Bandage non pneumatique (1, 1') comprenant :

une section cylindrique externe (100) ayant une bande de roulement ;

une section cylindrique interne (200) raccordée à un essieu d'un véhicule ; et

une unité de rayon de roue antibruit et anti-vibration (300) raccordant la section cylindrique externe (100) à la section cylindrique interne (200),

dans lequel l'unité de rayon de roue antibruit et anti-vibration (300) comprend une pluralité d'aubes de rayon de roue (310) raccordant la section cylindrique externe (100) à la section cylindrique interne (200), chacune des aubes de rayon de roue (310) étant inclinée par rapport à une direction axiale de l'essieu,

dans lequel chacune des aubes de rayon de roue (310) est verticalement raccordée à une surface circonférentielle interne de la section cylindrique externe (100) et une surface circonférentielle externe de la section cylindrique interne (200),

**caractérisé en ce que** la pluralité des aubes de rayon de roue (310) sont agencées pour avoir deux modèles d'inclinaison ou plus dans la direction axiale de l'essieu tout en étant inclinées dans des directions opposées entre elles, l'unité de rayon de roue antibruit et anti-vibration (300) étant supportée de manière continue par une surface de route pendant la circulation du véhicule, réduisant ainsi le bruit et la vibration.

FIG. 1

FIG. 2

FIG. 3

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 8905736 A1

- US 1278416 A